# EUROPEAN PATENT APPLICATION

(11) **EP 4 838 600 A1**
(43) Date of publication of application: **11.11.2026**
(21) Application number: 26157262.2
(22) Date of filing: 09.02.2026
(51) Int. Cl.: H01M 10/04, H01M 10/0583, H01M 50/533

(54) **SECONDARY BATTERY**

(30) Priority: 07.05.2025 JP 2025077532
(71) Applicant: Toyota Jidosha Kabushiki Kaisha, Toyota-shi, Aichi-ken 471-8571 (JP)
(72) Inventor: HIRUKAWA, Tomofumi, TOYOTA-SHI, AICHI-KEN, 471-8571 (JP); IKEYAMA, Suguru, TOYOTA-SHI, AICHI-KEN, 471-8571 (JP); KATO, Kazuhito, TOYOTA-SHI, AICHI-KEN, 471-8571 (JP); SAKASHITA, Yasuhiro, TOYOTA-SHI, AICHI-KEN, 471-8571 (JP); SHIMURA, Yosuke, TOYOTA-SHI, AICHI-KEN, 471-8571 (JP); NAKANO, Takahiko, TOYOTA-SHI, AICHI-KEN, 471-8571 (JP)
(74) Representative: Cabinet Beau de Loménie

(57) **Abstract**

A secondary battery includes an electrode stack in which a plurality of electrodes, each including an electrode active material layer coated on at least one face of a sheet-shaped current collector, is stacked in a first direction via a separator folded in accordion fashion. Each of the electrodes includes a current collector tab that is one of tabs, fashioned by an uncoated portion of the current collector not coated with the electrode active material layer protruding in a direction away from a coated portion coated with the electrode active material layer, and a positioning tab that is one of the tabs, and not used for connection with other conductors. The electrodes are stacked such that the current collector tabs provided to the electrodes are overlaid on each other, and also the positioning tabs provided to each of the electrodes are overlaid on each other, when viewed from the first direction.

## Description

### BACKGROUND OF THE INVENTION

### 1. Field of the Invention

The technology disclosed in the present specification relates to a secondary battery.

### 2. Description of Related Art

US 2024-0063424 A discloses an electrode assembly for a secondary battery, which includes a plurality of cathode plates, a plurality of anode plates, and a separator disposed between the cathode plates and the anode plates. According to US 2024-0063424 A, the separator is folded in a zigzag pattern (accordion fold), and multiple cathode plates and multiple anode plates are stacked alternately in folded sections of the separator.

Japanese Unexamined Patent Application Publication No. 2007-180391 (JP 2007-180391) discloses a capacitor element having a plurality of cathode foils and anode foils, and a plurality of separators. According to this capacitor element, two tab electrodes are connected to the same side of each of the cathode foils, and one tab electrode is connected to each of the anode foils. Also, all the cathode and anode tab electrodes are connected to lead wires.

WO 2018/155210 discloses a configuration of a secondary battery in which some of a plurality of cathodes and/or some of a plurality of anodes have a lead-out tab and a connection tab. The lead-out tab is joined to a current collector lead. The connection tabs are bundled together to form an electrical connection.

### SUMMARY OF THE INVENTION

In an electrode stack in which a plurality of electrodes is stacked with separators clamped therebetween, as in the electrode assembly described above, there has been a problem of relative positional misalignment occurring among the electrodes, and relative positional misalignment occurring between the separators and the electrodes (hereinafter referred to as "positional misalignment"), in directions intersecting a stacking direction. Accordingly, there is demand for further improvement to suppress positional misalignment.

The present specification discloses a secondary battery. The secondary battery includes an electrode stack in which a plurality of electrodes, each in which an electrode active material layer is coated on at least one face of a current collector that is sheet-shaped, is stacked in a first direction via a separator that is folded in accordion fashion. Each of the electrodes includes a current collector tab that is one of tabs that are fashioned by an uncoated portion of the current collector that is not coated with the electrode active material layer protruding in a direction away from a coated portion that is coated with the electrode active material layer, and a positioning tab that is one of the tabs, and that is not used for connection with other conductors. The electrodes are stacked such that the current collector tabs provided to each of the electrodes are overlaid on each other, and also the positioning tabs provided to each of the electrodes are overlaid on each other, when viewed from the first direction.

According to the above configuration, each of the electrodes includes a current collector tab and a positioning tab, and the electrodes are positioned relative to each other by the current collector tabs and the positioning tabs, respectively. Accordingly, the aforementioned positional misalignment can be suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a secondary battery;
FIG. 2 is an exploded perspective view of an electrode stack;
FIG. 3 is a simplified view of the electrode stack from a perspective in a first direction;
FIG. 4 is a simplified view of an electrode stack according to an example different from that of FIG. 3, from a perspective in the first direction; and
FIG. 5 is a simplified view of an electrode stack according to an example different from that of FIGS. 3 and 4, from a perspective in the first direction.

### DETAILED DESCRIPTION OF EMBODIMENTS

Primary features of an embodiment described below will first be described. These features can be combined optionally.

According to the secondary battery disclosed in the present specification, the current collector tab and the positioning tab may be laid out diagonally on the electrode.

According to this configuration, utilizing the current collector tabs and the positioning tabs that are laid out diagonally enables the electrodes to be positioned easily and accurately, relative to each other.

According to the secondary battery disclosed in the present specification, the positioning tab may be smaller than the current collector tab.

According to this configuration, making the positioning tab to be smaller than the current collector tab enables unnecessary contact between the positioning tab and other parts to be averted, thereby leading to conservation of materials and reducing the size of the product.

According to the secondary battery disclosed in the present specification, one or both of the current collector tab and the positioning tab may include a notch or a hole for positioning.

According to this configuration, using the notch or the hole formed in the tab as a reference enables accuracy of positioning the electrodes relative to each other to be further improved.

According to the secondary battery disclosed in the present specification, the current collector tab and the positioning tab may each protrude beyond a range of being clamped by the separator.

According to this configuration, positioning using the current collector tab and the positioning tab becomes even easier.

The embodiment will be described with reference to the drawings. The drawings are merely exemplary, and the present embodiment is not limited to the content that is illustrated in the drawings. Also, the drawings are exemplary, and accordingly a portion thereof may be omitted.

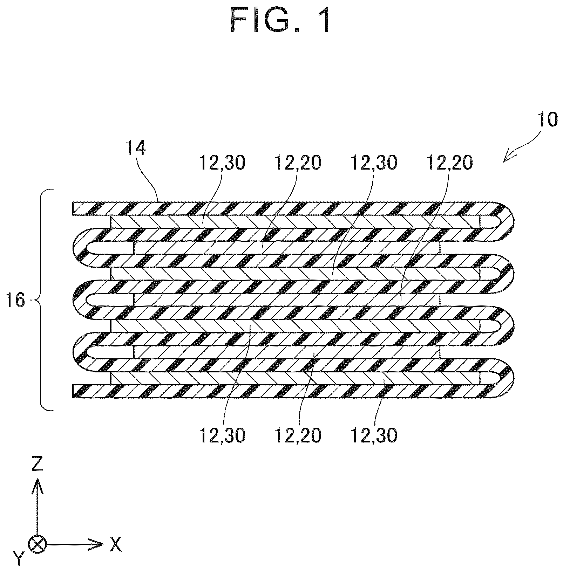

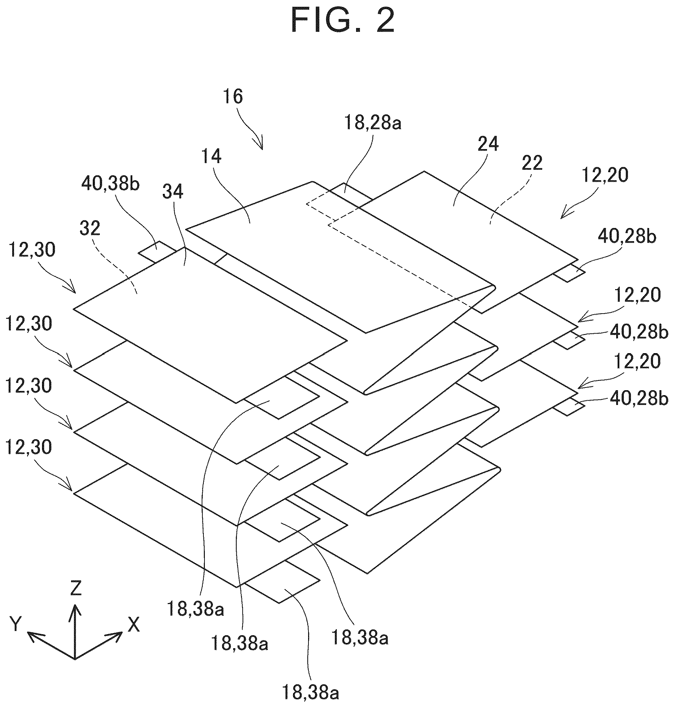

FIG. 1 is a simplified illustration of a cross-section of a secondary battery 10. The secondary battery 10 may be, for example, a lithium-ion battery that is chargeable and dischargeable. The secondary battery 10 includes an electrode stack 16 formed by stacking a plurality of electrodes 12 in a first direction with a separator 14 interposed therebetween. FIG. 2 is an exploded perspective view of the electrode stack 16, illustrated in a simplified manner. The electrodes 12 include cathodes 20 and anodes 30.

The secondary battery 10 includes an outer encasement, omitted from illustration, that is flexible, and the electrode stack 16 is sealed inside the outer encasement. An electrolytic solution, omitted from illustration, is sealed inside the outer encasement. The outer casing is, for example, a laminate sheet. For convenience of description, X, Y, and Z axes that are orthogonal to each other are indicated in the drawings. A Z-axis direction (+Z-axis direction and -Z-axis direction) corresponds to the first direction. The first direction may also be referred to as "stacking direction". FIG. 1 is a sectional view taken along a plane orthogonal to the Y-axis.

The electrode stack 16 is formed by alternately stacking the cathodes 20 that are substantially rectangular and the anodes 30 that are substantially rectangular in the first direction, such that the separator 14 that is strip-shaped and is folded repeatedly in accordion fashion with alternating mountain folds and valley folds is interposed therebetween. The state in this case is a state in which each of a plurality of the cathodes 20 is clamped by one face of both faces of the separator 14, while each of a plurality of the anodes 30 is clamped by another face of both faces of the separator 14. The cathodes 20 and the anodes 30 each extend in an X-axis direction and a Y-axis direction. The separator 14 is formed of a material that provides both permeability that enables movement of charge carriers (lithium ions here) in conjunction with charging and discharging, and insulation that suppresses short-circuiting caused by contact between the cathodes 20 and the anodes 30. Examples of materials for the separator 14 include polypropylene, polyethylene, and so forth.

Each of the electrodes 12 includes a current collector in the form of a sheet and an electrode active material layer coated on at least one face of the current collector. As illustrated in FIG. 2, each of the cathodes 20 includes a cathode current collector 22 and a cathode active material layer 24 coated on the cathode current collector 22. The cathode active material layer 24 is coated, for example, on both faces of the cathode current collector 22. The cathode current collectors 22 are, for example, aluminum foil. The cathode active material layers 24 contain a cathode active material. Examples of the cathode active material include lithium nickel composite oxides, lithium cobalt composite oxides, lithium manganese composite oxides, and so forth.

Each of the anodes 30 includes an anode current collector 32 and an anode active material layer 34 coated on the anode current collector 32. The anode active material layer 34 is coated on, for example, both faces of the anode current collector 32. The anode current collectors 32 are, for example, copper foil. The anode active material layers 34 contain an anode active material. Examples of the anode active material include carbon material such as graphite, hard carbon, soft carbon, and so forth, materials that form alloys with lithium, such as silicon (Si) and so forth, and lithium alloys and so forth. The electrode active material may be made of a single type of material, or may be made of a plurality of types of materials. The electrode active material layer may also contain a conductive aid, a binder, and so forth.

In each of the electrodes 12 (cathode 20, anode 30), a range in which the electrode active material layer (cathode active material layer 24, anode active material layer 34) is coated on the current collector (cathode current collector 22, anode current collector 32) is referred to as "coated portion", and a range in which the electrode active material layer is not coated on the current collector is referred to as "uncoated portion". Each of the electrodes 12 includes a "tab" that is formed by an uncoated portion protruding in a direction away from the coated portion. That is to say, the tab is an uncoated portion. The tab protrudes in a second direction intersecting the first direction. According to each drawing, the Y-axis direction (+Y-axis direction and -Y-axis direction) corresponds to the second direction.

In the present embodiment, the tabs include a "current collector tab 18" and a "positioning tab 40". Each of the electrodes 12 includes the current collector tab 18 and the positioning tab 40 at predetermined positions for the current collector tab 18 and the positioning tab 40, respectively. Both of these tabs are integral with the current collector. That is to say, the tab is an uncoated portion that is left in a tab shape without being coated with the electrode active material layer during the process of manufacturing the electrode 12, and is not a member added to the electrode 12.

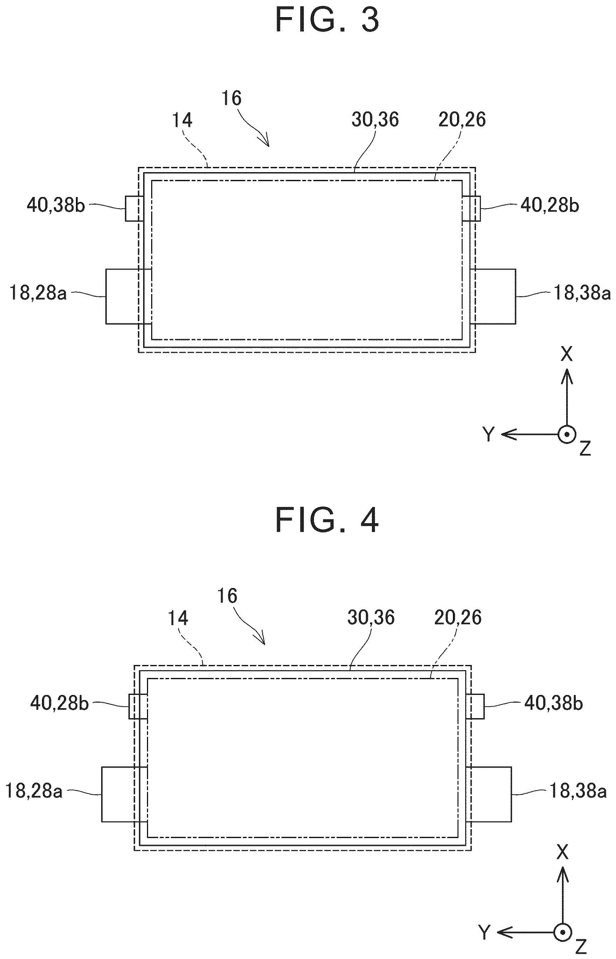

FIG. 3 is a simplified view of the electrode stack 16 from a perspective facing the Z-axis direction (here, the -Z-axis direction). In FIG. 3, a cathode coated portion 26 that is the coated portion of the cathode 20 is indicated by a rectangle drawn with long dashed double-short dashed lines, and an anode coated portion 36 that is the coated portion of the anode 30 is indicated by a rectangle drawn with continuous lines. From the viewpoint of FIG. 3, as an example, the cathode coated portion 26 is smaller in size than the anode coated portion 36 and is contained within a range of the anode coated portion 36. Further, in FIG. 3, the separator 14 that is folded in accordion fashion and stacked together with the cathodes 20 and the anodes 30 as illustrated in FIGS. 1 and 2, is indicated by a rectangle with dashed lines. From the perspective in FIG. 3, the cathode coated portion 26 and the anode coated portion 36 are both smaller in size than the separator 14, and are contained within a range of the separator 14.

The cathode 20 includes a cathode current collector tab 28a which is the current collector tab 18, and a cathode positioning tab 28b which is the positioning tab 40. The anode 30 includes an anode current collector tab 38a which is the current collector tab 18, and an anode positioning tab 38b which is the positioning tab 40. According to FIG. 3, the cathode current collector tab 28a, the cathode positioning tab 28b, the anode current collector tab 38a, and the anode positioning tab 38b all protrude beyond the range clamped by the separator 14.

According to FIGS. 2 and 3, the cathode current collector tab 28a protrudes from the cathode coated portion 26 in the +Y direction, and the cathode positioning tab 28b protrudes from the cathode coated portion 26 in the -Y direction. Also, the anode current collector tab 38a protrudes from the anode coated portion 36 in the -Y axis direction, and the anode positioning tab 38b protrudes from the anode coated portion 36 in the +Y axis direction. That is to say, the cathode current collector tab 28a and the anode current collector tab 38a protrude in opposite directions from each other. In the same way, the cathode positioning tab 28b and the anode positioning tab 38b protrude in opposite directions from each other.

According to FIGS. 2 and 3, the positioning tabs 40 are smaller than the current collector tabs 18. That is to say, the cathode positioning tab 28b is smaller than the cathode current collector tab 28a and the anode current collector tab 38a, and the anode positioning tab 38b is smaller than the cathode current collector tab 28a and the anode current collector tab 38a. According to FIGS. 2 and 3, the electrodes 12 have the current collector tabs 18 and the positioning tabs 40 that are disposed diagonally. That is to say, the cathode current collector tab 28a and the cathode positioning tab 28b that are provided to the cathode 20 are disposed substantially diagonally with the cathode coated portion 26 as the reference. Similarly, the anode current collector tab 38a and the anode positioning tab 38b that are provided to the anode 30 are disposed substantially diagonally with the anode coated portion 36 as the reference.

The cathode current collector tab 28a, which the cathodes 20 each have, is electrically connected to a cathode terminal that is omitted from illustration. Similarly, the anode current collector tab 38a, which the anodes 30 each have, is electrically connected to an anode terminal that is omitted from illustration. On the other hand, the positioning tabs 40 are not used for connection to other conductors. That is to say, the cathode positioning tab 28b, which the cathodes 20 each have, is not used for electrical connection, and exists only for positioning and position adjustment. Similarly, the anode positioning tab 38b, which the anodes 30 each have, is not used for electrical connection, and exists only for positioning and position adjustment.

When viewed from the first direction, the electrodes 12 are stacked such that the current collector tabs 18 of the electrodes are overlaid on each other, and also the positioning tabs 40 of the electrodes are overlaid on each other. That is to say, the cathodes 20 that make up the electrode stack 16 are stacked such that the positions of the cathode current collector tabs 28a are overlaid on each other, and also the positions of the cathode positioning tabs 28b are overlaid on each other, when viewed from the first direction. Similarly, the anodes 30 that make up the electrode stack 16 are stacked such that the positions of the anode current collector tabs 38a are overlaid on each other, and also the positions of the anode positioning tabs 38b are overlaid on each other, when viewed from the first direction. Accordingly, in the perspective in FIG. 3, the positions of the cathodes 20 are overlaid, and as a result, only one cathode 20 seems to be illustrated. Similarly, in the perspective in FIG. 3, the positions of the anodes 30 are overlaid, and as a result, only one anode 30 seems to be illustrated. Note that the expression of a plurality of the tabs being overlaid on each other when viewed from the first direction is not limited to cases in which the positions of the tabs are overlaid in a perfectly aligned manner, but also includes cases in which the tabs are overlaid in a manner aligned within a predetermined degree of misalignment.

As described above, according to the present embodiment, each of the electrodes 12 includes a current collector tab 18 and a positioning tab 40, with the current collector tabs 18 being used to position each other, and the positioning tabs 40 being used to position each other. Accordingly, misalignment among the electrodes 12, such as misalignment among the cathodes 20 and misalignment among the anodes 30, is appropriately suppressed. Also, the current collector tabs 18 and the positioning tabs 40 serve as a sort of reference, and accordingly positional adjustment among the electrodes 12 and the separator 14 is also facilitated, and as a result, misalignment among the separator 14 and the electrodes 12 is also suppressed. Thus, quality of the secondary battery 10 is improved.

Also, as described with reference to FIG. 3, the cathode current collector tabs 28a, the cathode positioning tabs 28b, the anode current collector tabs 38a, and the anode positioning tabs 38b are portions that each protrude out from the separator 14, thereby facilitating visual recognizability thereof, so as to function as references for positioning even in a state of being clamped between the separator 14 in the first direction. This facilitates positioning using the current collector tabs 18 and the positioning tabs 40. Also, the positioning tab 40 is smaller in size than the current collector tab 18, and accordingly unnecessary contact with other parts is averted, while contributing to conservation of materials and reducing the size of the product as well.

FIG. 4 is a simplified view of the electrode stack 16 from a perspective facing the Z-axis direction (here, the -Z-axis direction), in the same way as in FIG. 3. Just points of difference from FIG. 3 will be described regarding FIG. 4. According to FIG. 4, in the cathodes 20, the cathode current collector tabs 28a and the cathode positioning tabs 28b protrude from the cathode coated portions 26 in the +Y direction. Also, according to FIG. 4, in the anodes 30, the anode current collector tabs 38a and the anode positioning tabs 38b protrude from the anode coated portions 36 in the -Y-axis direction. That is to say, in the electrodes 12, the current collector tabs 18 and the positioning tabs 40 do not have to be arranged diagonally, and may be formed so as to protrude in a common direction from a common side of the electrode 12.

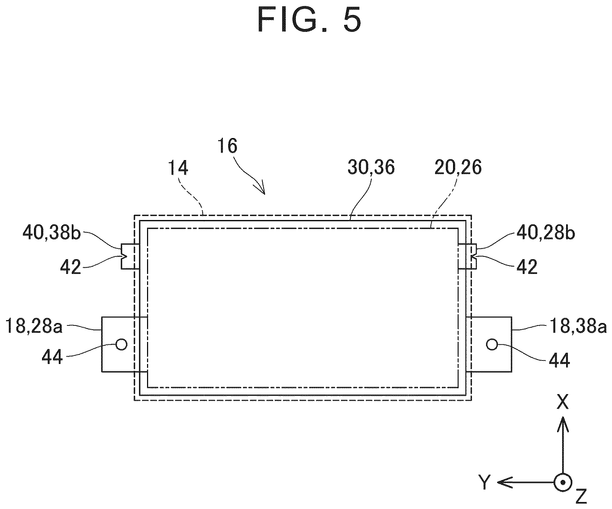

One or both of the current collector tabs 18 and the positioning tabs 40 may include notches 42 or holes 44 for positioning. FIG. 5 is a simplified view of the electrode stack 16 from a perspective facing the Z-axis direction (here, the -Z-axis direction), in the same way as in FIG. 3. Just points of difference from FIG. 3 will be described regarding FIG. 5. According to FIG. 5, the cathode current collector tabs 28a and the anode current collector tabs 38a each have the hole 44 formed passing through these current collector tabs 18. Also, the cathode positioning tabs 28b and the anode positioning tabs 38b each have the notch 42 formed passing through these positioning tabs 40, and open at the edges of theses positioning tabs 40.

A notch 42 may be formed in place of the hole 44 in either or both of the cathode current collector tabs 28a and the anode current collector tabs 38a. A hole 44 may be formed in place of the notch 42 in either or both of the cathode positioning tabs 28b and the anode positioning tabs 38b. An arrangement may be made in which the hole 44 or the notch 42 is formed in either one of the cathode current collector tabs 28a and the cathode positioning tabs 28b, while neither the hole 44 nor the notch 42 is formed in the other. An arrangement may be made in which the hole 44 or the notch 42 is formed in either one of the anode current collector tabs 38a and the anode positioning tabs 38b, while neither the hole 44 nor the notch 42 is formed in the other. The notches 42 or the holes 44 formed in each of the overlaid tabs provide easy reference for positioning each tab. Accordingly, the accuracy of positioning the electrodes 12 relative to each other can be further improved by using the notches 42 or the holes 44 as a reference.

As illustrated in FIG. 5, each of the notches 42 and the holes 44 is formed at a position outside of the separator 14 in the corresponding tabs. Accordingly, even when each of the electrodes 12 is clamped between separator 14 in the first direction, the notches 42 and the holes 44 formed in the tabs effectively function as references for positioning. The tabs may have notches 42 or holes 44 formed therein in the configuration illustrated in FIG. 4, as a matter of course.

The layout of the current collector tabs 18 and the positioning tabs 40 on the electrodes 12 is not limited to the examples described above. For example, out of the four sides that define the approximately rectangular coated portion of the electrode 12, the current collector tab 18 and the positioning tab 40 may each protrude from two sides that are connected to form a corner therebetween. Referring to FIG. 2 for description, the cathode positioning tab 28b may protrude in the +X-axis direction from a side of the cathode 20 that is parallel to the Y-axis direction and does not face the separator 14, for example. The anode positioning tab 38b may protrude in the -X-axis direction from a side of the anode 30 that is parallel to the Y-axis direction and does not face the separator 14, for example.

The number of the current collector tabs 18 and the positioning tabs 40 provided on one electrode 12 may each be more than one. However, from the perspective of positioning, one positioning tab 40 for one electrode 12 is sufficient.

As described above, the positioning tabs 40 are for positioning purposes only. Accordingly, once the electrode stack 16 is completed, the positioning tabs 40 are useless and may be trimmed away from the electrodes 12. However, even when the positioning tabs 40 are trimmed away from the electrodes 12, as long as a portion of a positioning tab 40 remains connected to an electrode 12 even slightly and is not trimmed away, it can be said that the electrode 12 has the positioning tab 40.

Although specific examples of the technology disclosed in the present specification have been described in detail above, these are merely exemplary and do not limit the scope of the claims. The technology described in the claims includes various modifications and variations of the specific examples exemplified above. Also, the technical elements described in the present specification and the drawings exhibit technical utility either individually or in various combinations, and are not limited to the combinations described in the claims as originally filed. Also, the technology exemplified in the present specification and the drawings achieve multiple objectives simultaneously, and achieving even one of these objectives alone provides technical utility.

## Claims

1. A secondary battery (10) comprising
an electrode stack (16) in which a plurality of electrodes (12), each in which an electrode active material layer (24,34) is coated on at least one face of a current collector (22,32) that is sheet-shaped, is stacked in a first direction via a separator (14) that is folded in accordion fashion, wherein
each of the electrodes (12) includes
a current collector tab (18) that is one of tabs that are fashioned by an uncoated portion of the current collector (22,32) that is not coated with the electrode active material layer (24,34) protruding in a direction away from a coated portion that is coated with the electrode active material layer (24,34), and
a positioning tab (40) that is one of the tabs, and that is not used for connection with other conductors, and
the electrodes (12) are stacked such that the current collector tabs (18) provided to each of the electrodes (12) are overlaid on each other, and also the positioning tabs (40) provided to each of the electrodes (12) are overlaid on each other, when viewed from the first direction.

2. The secondary battery (10) according to claim 1, wherein the current collector tab (18) and the positioning tab (40) are laid out diagonally on the electrode (12).

3. The secondary battery (10) according to any one of claims 1 or 2, wherein the positioning tab (40) is smaller than the current collector tab (18).

4. The secondary battery (10) according to any one of claims 1 to 3, wherein one or both of the current collector tab (18) and the positioning tab (40) includes a notch (42) or a hole (44) for positioning.

5. The secondary battery (10) according to any one of claims 1 to 4, wherein the current collector tab (18) and the positioning tab (40) each protrude beyond a range of being clamped by the separator (14).
